# EUROPEAN PATENT APPLICATION

(11) **EP 4 071 965 A1**
(43) Date of publication of application: **12.10.2022**
(21) Application number: 21167240.7
(22) Date of filing: 07.04.2021
(51) Int. Cl.: H02J 7/02, B60L 53/30, H02J 1/10, H02J 7/00

(54) **CHARGER FOR CHARGING ELECTRIC VEHICLES**

(71) Applicant: ABB Schweiz AG, 5400 Baden (CH)
(72) Inventor: TOMBELLI, Fabio, 2291 ZJ Wateringen (NL)
(74) Representative: van Trier, Norbertus Henricus Gerardus

(57) **Abstract**

The invention relates to a charger for charging electric vehicles, comprising: M AC/DC converters configured for being coupled to a power source at an input side, and being coupled to a DC bus at an output side thereof; a DC bus connected to each of the M AC/DC converters; N DC/DC converters coupled to the DC bus at an input side thereof, and configured to be coupled to D energy exchange ports at an output side thereof; and D energy exchange ports coupled to one or more of the N DC/DC converters at an input side thereof, and each configured to be coupled to an electric vehicle, wherein N > M, and wherein an energy storage is coupled to the DC bus.

## Description

### BACKGROUND

The invention relates to a charger for charging electric vehicles. Furthermore, the invention relates to an assembly for charging electric vehicles.

Chargers for charging electric vehicles are known. Such a known charger comprises a number of AC/DC converters which are coupled to an AC source at the input side thereof, and to a DC bus on the output side thereof. The charger further comprises a number of DC/DC converters, which are connected to the DC bus at the input side thereof and to a number of energy exchange ports at the output side thereof, wherein the energy exchange ports are configured for being connected to an electric vehicle to be charged. In the known charger, the number of AC/DC converters is equal to the number of DC/DC converters.

### SUMMARY OF THE INVENTION

A disadvantage of the known chargers is that they are configured to operate optimally during peak use of the chargers, which peak use takes place during a very small part of the day. During non-peak use of the chargers, or during non-use of the charger, at least a number of the AC/DC converters is idling. While an AC/DC converter is idling, it is still drawing disadvantageously electricity from the energy source, such as the power grid. As a result, a charger for electric vehicles is drawing electric energy from the power grid continuously.

It is an object of the present invention to ameliorate or to eliminate one or more disadvantages of the known charger, to provide an improved charger or to at least provide an alternative charger.

According to a first aspect, the invention provides a charger for charging electric vehicles, comprising:
M AC/DC converters configured for being coupled to a power source at an input side, and being coupled to a DC bus at an output side thereof;
a DC bus connected to each of the M AC/DC converters;
N DC/DC converters coupled to the DC bus at an input side thereof, and configured to be coupled to D energy exchange ports at an output side thereof; and
D energy exchange ports coupled to one or more of the N DC/DC converters at an input side thereof, and each configured to be coupled to an electric vehicle,
wherein N > M, and
wherein an energy storage is coupled to the DC bus.

The charger for electric vehicles according to the invention has more DC/DC converters than AC/DC converters. The amount of electric energy that may be drawn from the AC source, such as the power grid, depends among others on the number of AC/DC converters and the capacity thereof. By reducing the number of AC/DC convertors, while maintaining the number of DC/DC converters in comparison to the known charger, the charger according to the invention may draw less energy from the power grid, while maintaining the number of electric vehicles that may be charged simultaneously. As a result of the reduced number of AC/DC convertors in comparison with the known charger, the charger according to the invention draws advantageously less electric energy from the power grid when at least some of the AD/DC converters are idling.

Therefore, the charger according to the invention may be configured to operate optimally during non-peak use of the charger, for example during working hours in the daytime. When a lot of electric vehicles are connected to the charger simultaneously, for example when all energy exchange ports are in use, a deficiency of electric energy provided by the AC/DC converters real-time may arise due to a peak in the electric energy demand. By connecting an energy storage to the DC bus, the energy storage may be charged during non-peak use of the charger, such that a surplus of electric energy from the AC/DC converters is stored at the energy storage, and the energy storage may compensate advantageously the deficiency of electric energy during peak use of the charger.

In an embodiment, the M AC/DC converters and the N DC/DC converters are arranged within a cabinet having a cabinet controller, wherein the cabinet controller is configured for collecting data of each of the M AC/DC converters and the N DC/DC converters and for distributing power over the N DC/DC converters. In an embodiment thereof, the charger comprises a switch matrix arranged between the N DC/DC converters and the D energy exchange ports and configured for coupling one or more of the N DC/DC converters to one or more of the D energy exchange ports. The cabinet controller provides the possibility to determine to which energy exchange ports are currently in use, i.e. an electric vehicle is connected to the energy exchange port, and which energy exchange ports are currently idling. By means of the switch matrix between the DC/DC converters and the energy exchange ports, for example, multiple DC/DC convertors may be operatively connected in parallel to a single energy exchange port, such that the electric vehicle coupled to the respective energy exchange port may receive advantageously an increased amount of electric energy from the energy exchange port in comparison with the situation in which only a single DC/DC convertor is operatively connected to the respective energy exchange port. An advantage of this embodiment, therefore, is that the electric routing between the DC/DC convertors and the energy exchange ports may be automatically adapted to the number of electric vehicles coupled to the charger.

In an embodiment, the charger, in particular the cabinet controller thereof, is connected or connectable to a site controller. The site controller may be connected to a virtual power plant, such that energy flow to the charger may be optimized, for example, in dependence of the amount of electric energy available on the power grid.

In an embodiment, the charger comprises a further switch matrix arranged between the M AC/DC converters and the N DC/DC converters, wherein the further switch matrix is configured for selectively connecting outputs of the M AC/DC converters to the N DC/DC converters. According to this embodiment, for example, two or more AC/DC convertors may be connected in parallel to a single DC/DC convertor, or vice versa, in dependence of among others the amount of energy required by the DC/DC convertors. An advantage of this embodiment is that the further switch matrix provides a flexible routing between the AC/DC converters and the DC/DC converters.

In an embodiment, the energy storage is a battery configured for storing electric energy.

In an embodiment, the charger comprises one or more solar panels operatively connected to the DC bus. An advantage of this embodiment is that the one or more solar panels are useable for charging the energy storage of the charger during daytime, such that solar energy may be used for charging electric vehicles during peak use of the charger.

According to a second aspect, the invention provides a charger assembly for charging electric vehicles, wherein the assembly comprises multiple chargers, wherein each of the chargers comprises:
M AC/DC converters configured for being coupled to a power source at an input side, and being coupled to a DC bus at an output side thereof;
a DC bus connected to each of the M AC/DC converters;
N DC/DC converters coupled to the DC bus at an input side thereof, and configured to be coupled to D energy exchange ports at an output side thereof; and
D energy exchange ports coupled to one or more of the N DC/DC converters at an input side thereof, and each configured to be coupled to an electric vehicle,
wherein N > M,
wherein the multiple chargers are interconnected to each other by means of a DC bus,
and wherein one or more energy storages are connected to the DC bus.

The charger assembly according to the invention has at least the same advantages as the charged according to the first aspect of the invention.

Additionally, the charger assembly according to the invention may have the advantage that one of the chargers may be used for providing electric energy to another one of the chargers via the DC bus, such that peak use of one of the chargers may be compensated by one or more other chargers.

In an embodiment, the AC/DC converters and the N DC/DC converters of each charger are arranged within a cabinet having a cabinet controller, wherein the cabinet controller is configured for collecting data of each of the M AC/DC converters and the N DC/DC converters and for distributing power over the N DC/DC converters.

In an embodiment, the cabinet controller of each charger is in data communication with a site controller. As mentioned above, the site controller may be connected to a virtual power plant, such that energy flow to the charger may be optimized, for example, in dependence of the amount of electric energy available on the power grid. Additionally, the site controller may be used, for example, for controlling how the multiple chargers work together and/or how much electric energy is used by each of the chargers.

In an embodiment, an energy storage, such as a battery storage, is connected to the DC bus. The energy storage may be used for compensating for a deficiency of energy available from the AC/DC converters, such that the chargers are capable of charging electric vehicles coupled to the charges at a normal rate during peak use of the chargers.

In an embodiment, one or more solar panels are connected to the DC bus. As mentioned above, the one or more solar panels may be used for t

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:

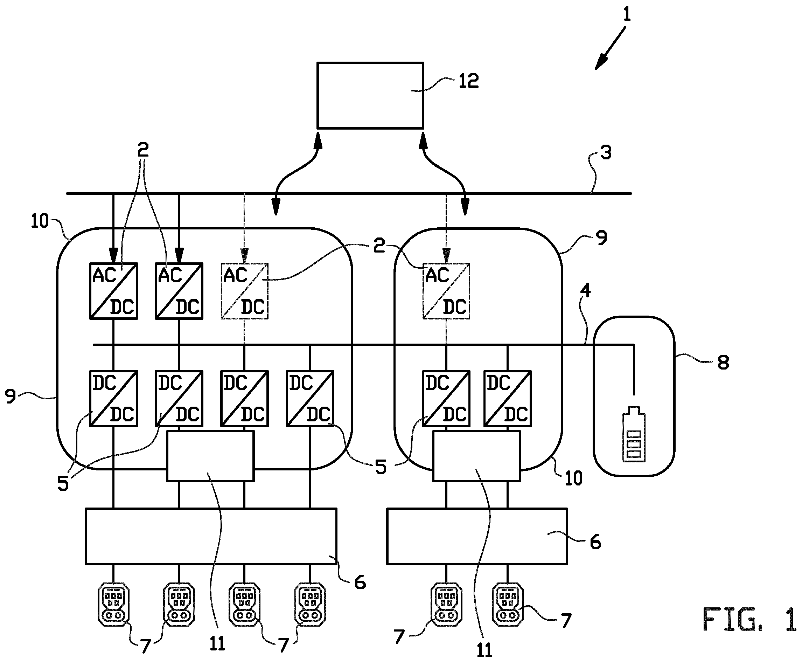

Figure 1 shows a schematic diagram of a charger assembly according to an embodiment of the invention.

### DETAILED DESCRIPTION OF THE INVENTION

A schematic diagram of a charger assembly 1 according to an embodiment of the invention is shown in figure 1. The charger assembly 1 may be used for charging one or more electric vehicles which may be connected to the charger assembly 1.

As shown in figure 1, the charger assembly 1 is provided with M AC/DC converters 2 configured for converting an alternating current to a digital current. Each of the M AC/DC converters 2 is electrically connected to an AC source 3, schematically indicated with the line 3, at an input side thereof, such that the AD/DC converters 2 may receive an alternating current from the AC source 3. At the output side, each of the AC/DC converters 2 is electrically connected to a DC bus 4, such that the direct current exiting the AC/DC converters may be transferred to the DC bus 4.

The charger assembly 1 is further provided with N DC/DC converters 5, each configured for converting a direct current to another direct current, for example with a higher/lower voltage. Each of the N DC/DC converters 5 is electrically connected to the DC bus 4 at the input side thereof, such that each of the DC/DC converters 5 may receive a direct current from the DC bus 4. As shown in figure 1, N > M, i.e. the number of DC/DC converters 5 is larger than the number of AC/DC converters 2. By having a lower number of AC/DC converters 2 than DC/DC converters 5, the charger assembly 1 is prevented from drawing large amounts of electric energy from the energy source 3, such as the power grid. The charger assembly 1 according to this embodiment is intended to operate optimally during non-peak use of the charger assembly 1, as a result of which charging of electric vehicles during peak use of the charger assembly 1 may take a bit longer.

At the output side, each of the DC/DC converters 5 is electric connected to a switch matrix 6, in particular an input side of the switch matrix 6. At the output side, a number of exchange ports 7 is provided, which exchange ports 7 are electric connected to the switch matrix 6. The exchange ports 7 are configured for establishing an electric connection between one or more non-shown electric vehicles and the charger assembly 1. The switch matrix 6 is configured for switching one or more outputs of the DC/DC converters 5 to one or more exchange ports 7, such that, for example, one DC/DC converter 5 may be connected to two electric vehicles or two DC/DC converters 5 may be connected to a single electric vehicle. The switch matrix 6 is intended for efficient use of each of the DC/DC converters 5.

Furthermore, the charger assembly 1 is provided with an energy storage 8, such as an battery, which is connected to the DC bus 4. The energy storage 8 is configured for peak shaving, such that when the demand for electric energy at the exchange ports 7 is higher than the input of electric energy at the input side of the AC/DC converters 2, additional electric energy may be provided to the DC/DC converters 5 by means of the energy storage 8, via the DC bus 4.

As shown in figure 1, the AC/DC converters 2 and the DC/DC converters are arranged within and divided over multiple charger cabinets 9, wherein each charger cabinet 9 represents a charger 10 for charging, for example, electric vehicles. The chargers 10 are interconnected by means of the DC bus 4. Each charger 10 is provided with a cabinet controller 11, which is operatively connected to the AC/DC converters and the DC/DC converters 5 arranged within the respective charger cabinet 9 and, optionally, to the switch matrix 6 of the charger cabinet 9. Each cabinet controller 11 is configured for collecting data of each of AC/DC converters 2 and the DC/DC converters 5, for example the amount of electric energy supplied by the AC/DC converters 5 and the amount of electric energy requested at the DC/DC converters 5, and for distributing power over the DC/DC converters 5 in dependence of the collected data.

The charger assembly 1 is further provided with a site controller 12 which is operatively connected to each of the charger cabinets 9 of the chargers 10, in particular to the cabinet controller 11 thereof. The cabinet controllers 11 transmit the collected data to the site controller 12, therewith enabling the site controller 12 to control each of the chargers 10 in order to optimize cooperation between the chargers 10 and/or to optimize a power flow between the chargers 10 and/or the power grid to which the chargers 10 are connected.

Although not shown, the charger assembly 1 may be provided with a number of solar panels which may be coupled to the DC bus 4. The solar panels may be used for charging the energy storage 8 during the day, such that less electric energy has to be extracted from the power grid.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Charger (10) for charging electric vehicles, comprising:
M AC/DC converters (2) configured for being coupled to a power source (3) at an input side, and being coupled to a DC bus (4) at an output side thereof;
a DC bus (4) connected to each of the M AC/DC converters (2);
N DC/DC converters (5) coupled to the DC bus (4) at an input side thereof, and configured to be coupled to D energy exchange ports (7) at an output side thereof; and
D energy exchange ports (7) coupled to one or more of the N DC/DC converters (5) at an input side thereof, and each configured to be coupled to an electric vehicle,
wherein N > M, and
wherein an energy storage (8) is coupled to the DC bus (4).

2. Charger (10) according to claim 1, wherein the M AC/DC (2) converters and the N DC/DC converters (5) are arranged within a cabinet (9) having a cabinet controller (11), wherein the cabinet controller (11) is configured for collecting data of each of the M AC/DC converters (2) and the N DC/DC converters (5) and for distributing power over the N DC/DC converters (5).

3. Charger (10) according to any one of the preceding claims, comprising a switch matrix (6) arranged between the N DC/DC converters (5) and the D energy exchange ports (7) and configured for coupling one or more of the N DC/DC converters (5) to one or more of the D energy exchange ports (7).

4. Charger (10) according to any one of the preceding claims, wherein the charger (10), in particular the cabinet controller (11) thereof, is connected or connectable to a site controller (12).

5. Charger (10) according to any one of the preceding claims, comprising a further switch matrix arranged between the M AC/DC converters (2) and the N DC/DC converters (5), wherein the further switch matrix is configured for selectively connecting outputs of the M AC/DC (2) converters to the N DC/DC converters (5).

6. Charger (10) according to any one of the preceding claims, wherein the energy storage (8) is a battery configured for storing electric energy.

7. Charger (10) according to any one of the preceding claims, comprising one or more solar panels operatively connected to the DC bus (4).

8. Charger assembly (1) for charging electric vehicles, wherein the assembly comprises multiple chargers (10), wherein each of the chargers (10) comprises:
M AC/DC converters (2) configured for being coupled to a power source (3) at an input side, and being coupled to a DC bus (4) at an output side thereof;
a DC bus (4) connected to each of the M AC/DC converters (2);
N DC/DC converters (5) coupled to the DC bus (4) at an input side thereof, and configured to be coupled to D energy exchange ports (7) at an output side thereof; and
D energy exchange ports (7) coupled to one or more of the N DC/DC converters (5) at an input side thereof, and each configured to be coupled to an electric vehicle,
wherein N > M,
wherein the multiple chargers (10) are interconnected to each other by means of a DC bus (4),
and wherein one or more energy storages (8) are connected to the DC bus (4).

9. Charger assembly (1) according to claim 8, wherein the AC/DC converters (2) and the N DC/DC converters (5) of each charger (10) are arranged within a cabinet (9) having a cabinet controller (11), wherein the cabinet controller (11) is configured for collecting data of each of the M AC/DC converters (2) and the N DC/DC converters (5) and for distributing power over the N DC/DC converters (5).

10. Charger assembly (1) according to claim 9, wherein the cabinet controller (11) of each charger (10) is in data communication with a site controller (12).

11. Charger assembly (1) according to any one of the claims 8-10, wherein an energy storage (8), such as a battery storage, is connected to the DC bus (4).

12. Charger assembly (1) according to any one of the claims 8-11, wherein one or more solar panels are connected to the DC bus (4).
